# EUROPEAN PATENT APPLICATION

(11) **EP 4 329 018 A1**
(43) Date of publication of application: **28.02.2024**
(21) Application number: 22791402.5
(22) Date of filing: 11.03.2022
(51) Int. Cl.: H01M 4/68, C22C 11/06, H01M 10/18

(54) **LEAD FOIL AND BIPOLAR LEAD-ACID BATTERY**

(30) Priority: 20.04.2021 JP 2021071370
(71) Applicant: FURUKAWA ELECTRIC CO., LTD., Tokyo 100-8322 (JP); The Furukawa Battery Co., Ltd., Yokohama-shi, Kanagawa-ken 240-0006 (JP)
(72) Inventor: KANEKO, Hiroshi, Tokyo 100-8322 (JP); YAMAUCHI, Miho, Tokyo 100-8322 (JP); FURUKAWA, Jun, Jyoban-shimofunao-machi, Iwaki-shi, Fukushima 972- 8501 (JP); KOIDE, Ayano, Jyoban-shimofunao-machi, Iwaki-shi, Fukushima 972- 8501 (JP); YAMADA, Keizo, Jyoban-shimofunao-machi, Iwaki-shi, Fukushima 972- 8501 (JP)
(74) Representative: Grünecker Patent- und Rechtsanwälte PartG mbB
(86) International application number: PCT/JP2022/011072
(87) International publication number: WO 2022/224622

(57) **Abstract**

Provided are lead foil and a bipolar lead acid storage battery capable of preventing breakage of the lead foil due to growth deformation. Provided is lead foil for a current collector in a bipolar lead acid storage battery, in which at least one of a front surface and a back face has a maximum valley depth Rv of 4 um or less in a profile curve acquired, orthogonally to a rolling direction, by surface roughness measurement with a stylus.

## Description

### Technical Field

The present invention relates to lead foil and a bipolar lead acid storage battery.

### Background Art

A bipolar lead acid storage battery includes a bipolar electrode including a positive electrode, a negative electrode, and a substrate (bipolar plate), on one surface of which the positive electrode is provided and on the other surface of which the negative electrode is provided. In a conventional bipolar electrode, lead foil is provided on both surfaces of a resin substrate, and a positive electrode and a negative electrode are provided on one surface and the other surface of the substrate, respectively.

### Citation List

### Patent Literature

PTL 1: JP 2004-158433 A

### Summary of Invention

### Technical Problem

Incidentally, lead foil used for an electrode of a bipolar lead acid storage battery causes growth deformation that expands with long-term use of the battery, and breakage due to the growth deformation sometimes becomes a problem.

Therefore, the present invention has been made in view of the above problems, and an object of the present invention is to provide lead foil and a bipolar lead acid storage battery capable of preventing breakage of the lead foil due to growth deformation.

### Solution to Problem

According to one aspect of the present invention, there is provided lead foil for a current collector in a bipolar lead acid storage battery, in which at least one of a front surface and a back surface has a maximum valley depth Rv of 4 um or less in a profile curve acquired, orthogonally to a rolling direction, by surface roughness measurement with a stylus.

According to one aspect of the present invention, there is provided a bipolar lead acid storage battery in which at least one of positive lead foil and negative lead foil is the above lead foil.

### Advantageous Effects of Invention

According to one aspect of the present invention, there are provided lead foil and a bipolar lead acid storage battery capable of preventing breakage of the lead foil due to growth deformation.

### Brief Description of Drawings

FIG. 1 is a cross-sectional view for explaining a structure of a bipolar lead acid storage battery according to an embodiment of the present invention;
FIG. 2 is an enlarged cross-sectional view of a bipolar electrode for explaining a structure of a main part of the bipolar lead acid storage battery of FIG. 1;
FIG. 3 is a graph depicting an example of a profile curve acquired by surface roughness measurement with a stylus; and
FIG. 4 is an explanatory view illustrating a rolling direction and a scanning direction for a lead foil.

### Description of Embodiments

In the following detailed description, embodiments of the present invention will be described with reference to the drawings. In the description of the drawings, the same or similar portions are denoted by the same or similar reference signs, and redundant description is omitted. Each drawing is schematic and includes a case different from an actual case. In addition, the embodiments described below illustrate apparatuses and methods for embodying the technical idea of the present invention, and the technical idea of the present invention does not specify the materials, structures, arrangements, and the like of the components as follows. Various modifications can be made to the technical idea of the present invention within the technical scope defined by the claims described in the claims.

### <Bipolar lead acid storage battery>

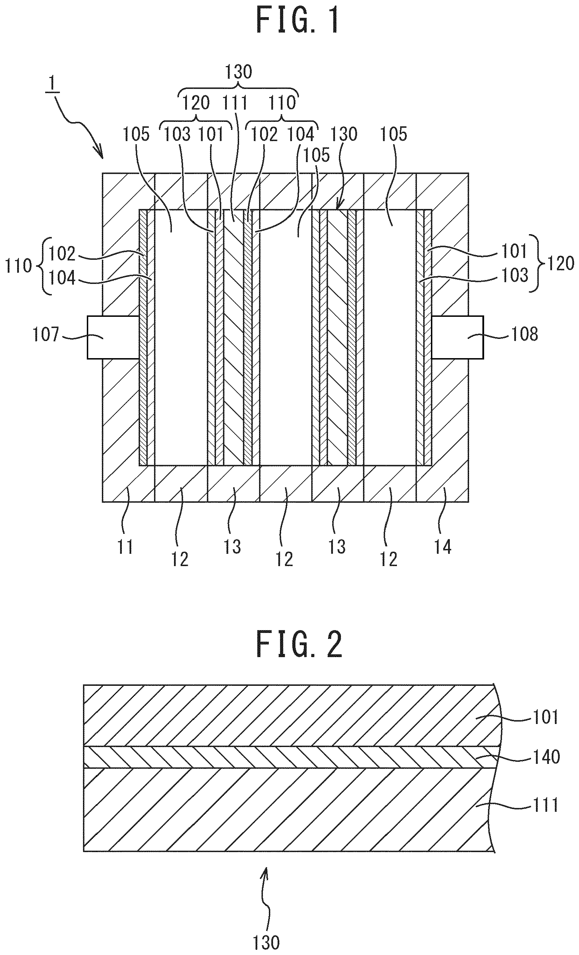

A structure of a bipolar lead acid storage battery 1 according to an embodiment of the present invention will be described with reference to FIGS. 1 and 2. The bipolar lead acid storage battery 1 illustrated in FIG. 1 includes a first plate unit in which a negative electrode 110 is fixed to a first plate 11 having a flat plate shape, a second plate unit in which an electrolytic layer 105 is fixed to the inside of a second plate 12 having a frame plate shape, a third plate unit in which a bipolar electrode 130, in which a positive electrode 120 is formed on one surface of a substrate 111 and a negative electrode 110 is formed on the other surface, is fixed to the inside of a third plate 13 having a frame plate shape, and a fourth plate unit in which the positive electrode 120 is fixed to a fourth plate 14 having a flat plate shape. The substrate 111 is formed of a thermoplastic resin.

Then, the second plate units and the third plate units are alternately stacked between the first plate unit and the fourth plate unit to form the bipolar lead acid storage battery 1 having a substantially rectangular parallelepiped shape. The number of the stacked second plate units and the number of the stacked third plate units are set such that the storage capacity of the bipolar lead acid storage battery 1 has a desired value.

A negative terminal 107 is fixed to the first plate 11, and the negative electrode 110 and the negative terminal 107 that are fixed to the first plate 11 are electrically connected.

A positive terminal 108 is fixed to the fourth plate 14, and the positive electrode 120 and the positive terminal 108 that are fixed to the fourth plate 14 are electrically connected.

The electrolytic layer 105 is formed of, for example, a glass fiber mat impregnated with an electrolyte containing sulfuric acid.

The first to fourth plates 11 to 14 are formed of, for example, a known molding resin. The first to fourth plates 11 to 14 are fixed to each other by an appropriate method such that the inside is sealed to prevent the electrolyte from flowing out.

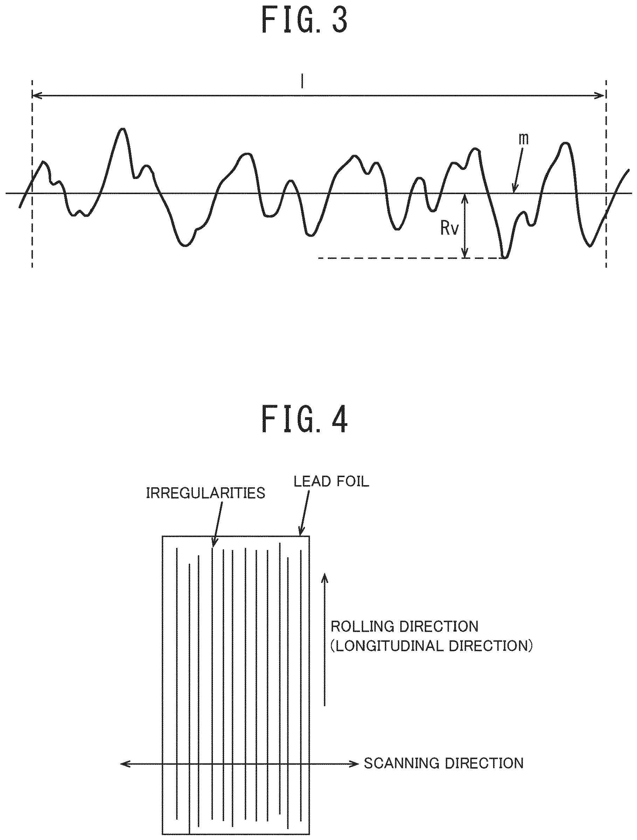

The positive electrode 120 includes positive lead foil 101 made of lead or a lead alloy and disposed on the one surface of the substrate 111, a positive active material layer 103 disposed on the positive lead foil 101, and an adhesive layer 140 disposed between the one surface of the substrate 111 and the positive lead foil 101 to bond the one surface of the substrate 111 to the positive lead foil 101. That is, on the one surface of the substrate 111 (upward-facing surface of the paper in FIGS. 2 and 3), the adhesive layer 140, the positive lead foil 101, and the positive active material layer 103 are stacked in this order.

The negative electrode 110 includes negative lead foil 102 made of lead or a lead alloy and disposed on the other surface of the substrate 111, a negative active material layer 104 disposed on the negative lead foil 102, and an adhesive layer (not illustrated) disposed between the other surface of the substrate 111 and the negative lead foil 102 to bond the other surface of the substrate 111 to the negative lead foil 102.

These positive electrode 120 and negative electrode 110 are electrically connected by an appropriate method.

Note that, in the cross-sectional view of the bipolar electrode illustrated in FIG. 2, illustration of the negative electrode 110 and the positive active material layer 103 is omitted.

In the bipolar lead acid storage battery 1 having such a configuration, the substrate 111, the positive lead foil 101, the positive active material layer 103, the negative lead foil 102, and the negative active material layer 104 constitute the bipolar electrode 130, as previously described. The bipolar electrode is an electrode, a single one of which functions as both a positive electrode and a negative electrode.

The bipolar lead acid storage battery 1 has a battery configuration in which a plurality of cell members are connected in series by alternately stacking and assembling the cell members in which the electrolytic layer 105 is interposed between the positive electrode 120 and the negative electrode 110.

Furthermore, in the bipolar lead acid storage battery 1 according to the present embodiment, the adhesive layer 140 disposed between the one surface of the substrate 111 and the positive lead foil 101 is formed of a cured product of a reaction-curable adhesive that is cured by reaction of a main agent containing an epoxy resin with a curing agent containing an amine compound.

### <Lead foil>

The lead foil according to the present embodiment is the positive lead foil 101 and the negative lead foil 102 in the above bipolar lead acid storage battery 1, that is, lead foil for a current collector in the bipolar lead acid storage battery 1. In the present embodiment, one surface of the lead foil that faces and is in contact with the positive active material layer 103 or the negative active material layer 104 is defined as a front surface, and the other surface of the lead foil that faces and is in contact with the substrate 111 is defined as a back surface. In addition, the lead foil is produced to have a predetermined thickness by being rolled with a rolling roll.

At least one of the front surface and the back surface of the lead foil has a maximum valley depth Rv of 4 um or less in a profile curve acquired, orthogonally to a rolling direction at the time of rolling, by surface roughness measurement with a stylus. The surface roughness measurement with a stylus can be performed by the measurement method specified in JIS B 0601:1994. When the lead foil is measured by this measurement method, a profile curve as illustrated in FIG. 3 is acquired. In the profile curve illustrated in FIG. 3, 1 is a measurement length, m is an average line, and Rv is the lowest valley depth (maximum valley depth), all of which are values defined in JIS B 0601:1994.

As illustrated in FIG. 4, the lead foil subjected to rolling processing has irregularities parallel to the rolling direction (longitudinal direction). Therefore, by performing, on the surface of the lead foil, surface roughness measurement with a stylus assuming that a direction orthogonal to the rolling direction is defined as a scanning direction, the irregularities of the lead foil can be accurately measured. In addition, it is preferable to perform, for each of the front surface and the back surface, the surface roughness measurement with a stylus at multiple locations, and the surface roughness measurement with a stylus may be performed, for example, at ten locations (the number of repetitions N = 10). Furthermore, the measurement length l may be a length of 4 mm from any place.

Here, the present inventors investigated and studied on breakage of lead foil due to growth deformation. As a result, it has been confirmed that, in the growth deformation, a portion thinner than the periphery is more easily deformed and local thinning is promoted, so that the lead foil is broken. It has also been confirmed that the breaking due to thinning becomes remarkable when a strain rate is small. Such a phenomenon in the lead foil is peculiar to lead that does not cause work hardening, and does not occur in other metals, such as copper and aluminum, used for an electrode. In the case of a metal foil of copper or aluminum, a region (local deformation portion), having a small thickness and deformed more than its periphery, is work-hardened more than its periphery. Therefore, deformation resistance is averaged, and uniform deformation is maintained.

If the lead foil is broken due to the growth deformation, the internal resistance of the bipolar lead acid storage battery 1 increases, resulting in a problem.

For such a problem of the lead foil, the present inventors have found that local thinning can be suppressed by making the thickness of the lead foil uniform. That is, by setting the maximum valley depth Rv of the lead foil to 4 um or less, the lead foil is uniformly deformed even if the growth deformation occurs, so that breakage due to the growth deformation can be prevented. The maximum valley depth Rv of the lead foil is preferably 2 um or less, and more preferably 1.5 um or less. By further reducing the maximum valley depth Rv of the lead foil, breakage due to the growth deformation can be prevented for a longer period of time.

The lead foil is made of lead or a lead alloy containing lead as a main component. It is preferable that the lead foil contains Sn and the content of Sn is 0.4% by mass or more and 2% by mass or less. When Sn is contained in the lead foil, the adhesion between the lead foil and the active material can be improved. If the content of Sn is less than 0.4% by mass, the adhesion between the lead foil and the active material is decreased, so that peeling of the active material layer or the like may occur. On the other hand, if the content of Sn is more than 2% by mass, intergranular corrosion susceptibility is increased, so that the lead foil may be easily degraded.

The lead foil preferably contains at least one type selected from the group consisting of Ca, Ag, and Cu. When any components of Ca, Ag, and Cu are contained in the lead foil, there is an effect of making the metal structure of a lead alloy uniform and making it easy to control the maximum valley depth to be shallow. Furthermore, the content of Ca is preferably more than 0% by mass and 0.1% by mass or less, the content of Ag is preferably more than 0% by mass and 0.05% by mass or less, and the content of Cu is preferably more than 0% by mass and 0.05% by mass or less. If the content of any component exceeds the above upper limit value, the corrosion resistance of the lead foil is decreased. On the other hand, if the contents of Ca, Ag, and Cu are lower than the above lower limit values, lead is easily deformed, and it is difficult to thinly roll the lead foil.

Furthermore, it is preferable that the lead foil contains Bi and the content of Bi is more than 0% by mass and 0.004% by mass or less. When Bi is contained in the lead foil, there is an effect of making the metal structure of a lead alloy uniform and making it easy to control the maximum valley depth to be shallow. However, if the content of Bi is more than 0.004% by mass, the moldability of the lead foil may be deteriorated. In particular, when the final plate thickness of the lead foil is thin, there is a high possibility that poor processability due to the addition of Bi may become apparent.

The content of each composition of the lead foil is determined by an emission spectroscopic analysis method.

In being subjected to rolling processing, the lead foil according to the present embodiment can be produced using a rolling roll whose circumferential side surface is polished in advance. In the polishing of the rolling roll, for example, mechanical polishing using a grindstone may be performed, or chemical polishing by etching may be performed. Alternatively, chemical polishing by etching may be performed after polishing using a grindstone. Furthermore, the lead foil may be produced by polishing the lead foil subjected to rolling processing. Even in this case, mechanical polishing, chemical polishing, or both mechanical polishing and chemical polishing may be performed as the polishing of the lead foil. In this case, the rolling roll used in the rolling processing may be polished in advance as described above, or may not be polished in advance.

### <Modifications>

Although the present invention has been described above with reference to specific embodiments, these descriptions are not intended to limit the invention. Another embodiment of the present invention, including various modifications along with the disclosed embodiments, will also be apparent to those skilled in the art with reference to the descriptions of the present invention. Therefore, it should be understood that the embodiments of the invention described in the claims also cover embodiments including, alone or in combination, these modifications described in the present description.

In the above embodiment, the maximum valley depth Rv is specified, for example, for both the front surface and the back surface, but the present invention is not limited to such an example. The surface, for which the maximum valley depth Rv is specified, may be, for example, only one of the front surface and the back surface. From the viewpoint of making the thickness of the lead foil more uniform, it is preferable to specify the maximum valley depth Rv for both the front surface and the back surface as in the embodiment.

In addition, in the above embodiment, the lead foils, for which the maximum valley depth Rv is specified, are the positive lead foil 101 and the negative lead foil 102, but the present invention is not limited to such an example. The lead foil, for which the maximum valley depth Rv is specified, may be, for example, only one of the positive lead foil 101 and the negative lead foil 102.

### Examples

Examples performed by the present inventors will be described. In Examples, a work roll, which was a rolling roll used in rolling, was polished, and then the rolling was performed using this work roll. Then, for the rolled lead foil, the maximum valley depth Rv was measured by surface roughness measurement with a stylus, and the thickness was measured. As the work roll, a chrome-plated iron-based base material was used.

In Examples 1 and 10, the work roll was mechanically polished with a grindstone having a grain size of #80. In Examples 2 and 11, the work roll was mechanically polished with a grindstone having a grain size of #320. In Examples 13 to 9 and 13 to 15, the work roll was mechanically polished with a grindstone having a grain size of #320, and then the work roll was mechanically polished with a grindstone having a grain size of #500. In Example 16, after the work roll was mechanical polished similarly to Examples 13 to 9 and 13 to 15, the work roll was etched (chemically polished) using an etching liquid for chromium (S-CLEAN S-24 manufactured by SASAKI CHEMICAL CO., LTD.). In Example 17, after mechanical polishing and chemical polishing were performed similarly to Example 16, the rolled lead foil was cut out, and the cut out lead foil was immersed in a mixed liquid of lactic acid and hydrogen peroxide to perform chemical polishing.

As a comparison, the lead foil was also similarly rolled under the condition of making the surface of the work roll coarse or the condition of increasing the content of Bi, and the maximum valley depth Rv was measured by surface roughness measurement with a stylus. In Comparative Example 1, the surface of the work roll was rubbed with a steel brush to set the maximum valley depth Rv of the surface of the work roll to more than 4.0 um, and the rolling was performed using this work roll. In Comparative Example 2, the rolling was performed using a work roll similarly to that in Example 1 under a condition in which the content of Bi was 0.01.

Furthermore, in Examples 1 to 9 and 13 to 15 and Comparative Example 1 to 2, an ingot having a thickness of 8 mm was rolled until the thickness became 0.25 mm. In Examples 10 to 12, an ingot having a thickness of 8 mm was rolled until the thickness became 0.10 mm. In Example 1, the surface roughness was small and slippage was likely to occur during the rolling, so that the rolling rate was set to 1 m/min or less and the reduction was set to 0.01 mm/pass or less.

In Examples, the produced lead foil was subjected to a tensile test. In the tensile test, a breaking elongation in a direction orthogonal to the rolling direction (scanning direction in the surface roughness measurement illustrated in FIG. 4) was measured. Since groove-shaped irregularities parallel to the longitudinal direction are formed on the rolled surface, a notch effect due to stress concentration on the bottom of the recess is maximized when the surface is pulled in the direction orthogonal to the rolling direction.

As the results of Examples, the alloy components of the lead foils, the maximum valley depths Rv, the thicknesses of the foils, and the test results of the tensile test are shown in Table 1. In Table 1, as the results of the tensile test, the case where the breaking elongation measured by the above method is 15% or more is indicated as "⊙ (Excellent)", the case where the breaking elongation is 10% or more and less than 15% is indicated as "o (Good)", the case where the breaking elongation is 5% or more and less than 10% is indicated as "Δ (Fair)", and the case where the breaking elongation is less than 5% is indicated as "× (Poor)".

**[Table 1]**

| | Alloy composition (% by mass) | | | | | | Rv [µm] | Thickness of foil [mm] | Tensile test |
|---|---|---|---|---|---|---|---|---|---|
| | Sn | Ca | Ag | Cu | Bi | Pb | | | |
| Example 1 | 1.8 | 0.09 | 0 | 0 | 0.002 | Balance | 3.8 | 0.25 | Good |
| Example 2 | 1.8 | 0.09 | 0 | 0 | 0.002 | Balance | 1.9 | 0.25 | Excellent |
| Example 3 | 1.8 | 0.09 | 0 | 0 | 0.002 | Balance | 1.4 | 0.25 | Excellent |
| Example 4 | 2.1 | 0.09 | 0 | 0 | 0.002 | Balance | 1.1 | 0.25 | Excellent |
| Example 5 | 0.3 | 0.09 | 0 | 0 | 0.002 | Balance | 1.1 | 0.25 | Excellent |
| Example 6 | 1.8 | 0 | 0 | 0 | 0.002 | Balance | 1.1 | 0.25 | Excellent |
| Example 7 | 1.8 | 0 | 0.03 | 0 | 0.002 | Balance | 1.1 | 0.25 | Excellent |
| Example 8 | 1.8 | 0 | 0 | 0.08 | 0.002 | Balance | 1.1 | 0.25 | Excellent |
| Example 9 | 1.8 | 0.04 | 0.01 | 0 | 0.002 | Balance | 1.1 | 0.25 | Excellent |
| Example 10 | 1.8 | 0.09 | 0 | 0 | 0.002 | Balance | 3.6 | 0.10 | Good |
| Example 11 | 1.8 | 0.09 | 0 | 0 | 0.002 | Balance | 1.7 | 0.10 | Good |
| Example 12 | 1.8 | 0.09 | 0 | 0 | 0.002 | Balance | 1.3 | 0.10 | Excellent |
| Example 13 | 1.8 | 0.2 | 0 | 0 | 0.002 | Balance | 1.1 | 0.25 | Excellent |
| Example 14 | 1.8 | 0 | 0.07 | 0 | 0.002 | Balance | 1.1 | 0.25 | Excellent |
| Example 15 | 1.8 | 0 | 0 | 0.08 | 0.002 | Balance | 1.1 | 0.25 | Excellent |
| Example 16 | 1.8 | 0.09 | 0 | 0 | 0.002 | Balance | 0.07 | 0.25 | Excellent |
| Example 17 | 1.8 | 0.09 | 0 | 0 | 0.002 | Balance | 0.06 | 0.25 | Excellent |
| Comparative Example 1 | 1.7 | 0.09 | 0 | 0 | 0.002 | Balance | 4.8 | 0.25 | Poor |
| Comparative Example 2 | 1.7 | 0.09 | 0 | 0 | 0.01 | Balance | - | - | - |

As shown in Table 1, in Examples 1 to 17, the maximum valley depths Rv were all 4.0 or less, and the results of the tensile test were also 10% or more, which were favorable. On the other hand, in Comparative Example 1, the maximum valley depth Rv was 4.8 µm, which exceeded the preferable range in the above embodiment, and the result of the tensile test was also less than 5%. This is because stress concentration occurred at a portion having a low valley depth, that is, a portion having a small thickness due to the growth deformation, so that breakage occurred. In Comparative Example 2, the amount of Bi was large, so that moldability was poor and edge cracking occurred at an intermediate plate thickness to the final finished thickness, and therefore the rolling was interrupted. In Comparative Example 2, satisfactory results were obtained without cracking up to the intermediate plate thickness to the final finished thickness. From the above results, according to the above embodiment, it has been confirmed that lead foil and a bipolar lead acid storage battery capable of preventing breakage of the lead foil due to growth deformation can be provided.

### Reference Signs List

- 1: Bipolar lead acid storage battery
- 101: Positive lead foil
- 102: Negative lead foil
- 103: Positive active material layer
- 104: Negative active material layer
- 105: Electrolytic layer
- 110: Negative electrode
- 111: Substrate
- 120: Positive electrode
- 130: Bipolar electrode
- 140: Adhesive layer

## Claims

1. Lead foil for a current collector in a bipolar lead acid storage battery, wherein
at least one of a front surface and a back face has a maximum valley depth Rv of 4 um or less in a profile curve acquired, orthogonally to a rolling direction, by surface roughness measurement with a stylus.

2. The lead foil according to claim 1, wherein a content of Sn is 0.4% by mass or more and 2% by mass or less.

3. The lead foil according to claim 1 or 2, wherein
the lead foil contains at least one type selected from the group consisting of Ca, Ag, and Cu,
a content of Ca is more than 0% by mass and 0.1% by mass or less,
a content of Ag is more than 0% by mass and 0.05% by mass or less, and
a content of Cu is more than 0% by mass and 0.05% by mass or less.

4. The lead foil according to any one of claims 1 to 3, wherein a content of Bi is more than 0% by mass and 0.004% by mass or less.

5. A bipolar lead acid storage battery, wherein at least one of positive lead foil and negative lead foil is the lead foil according to any one of claims 1 to 4.
